(19) Europäisches Patentamt / European Patent Office / Office européen des brevets

(11) **EP 1 980 866 A1**

(12) **DEMANDE DE BREVET EUROPEEN**

(43) Date de publication:
**15.10.2008 Bulletin 2008/42**

(51) Int Cl.:
***G01S 1/00*** *(2006.01)*

(21) Numéro de dépôt: **08154416.5**

(22) Date de dépôt: **11.04.2008**

| (84) Etats contractants désignés:<br>**AT BE BG CH CY CZ DE DK EE ES FI FR GB GR HR HU IE IS IT LI LT LU LV MC MT NL NO PL PT RO SE SI SK TR**<br>Etats d'extension désignés:<br>**AL BA MK RS**<br><br>(30) Priorité: **13.04.2007 FR 0754448**<br><br>(71) Demandeur: **Sagem Défense Sécurité**<br>**75015 Paris (FR)** | (72) Inventeur: **Luneau, M. Ghislain**<br>**c/o SAGEM DEFENSE SECURITE**<br>**75015 Paris (FR)**<br><br>(74) Mandataire: **Callon de Lamarck, Jean-Robert et al**<br>**Cabinet Regimbeau**<br>**20 rue de Chazelles**<br>**75847 Paris cedex 17 (FR)** |

(54) **Procédé de mitigation du phénomène de multitrajet dans un récepteur de positionnement par satellites**

(57) L'invention concerne selon un premier aspect un procédé d'atténuation du phénomène de multitrajet dans un récepteur de positionnement par satellites, dans lequel on filtre les perturbations affectant une pseudo-distance à un satellite mesurée par le récepteur en lissant ladite pseudo-distance par des mesures Doppler déduites de mesures de phase porteuse d'un signal émis par le satellite, caractérisé en ce que le lissage de ladite pseudo-distance est mis en oeuvre à l'aide d'un filtre de lissage non-stationnaire de manière à contrôler le transitoire de rejet d'un perturbation, le gain du filtre de lissage non stationnaire étant varié à chaque instant en fonction du temps écoulé depuis l'initialisation du lissage. L'invention s'étend également à un récepteur de positionnement par satellites comprenant des moyens pour mettre en oeuvre le procédé selon la premier aspect de l'invention.

FIG.2b

EP 1 980 866 A1

**Description**

L'invention est relative aux récepteurs de positionnement par satellites et concerne plus précisément un procédé et un système de mitigation du phénomène de multitrajet dans un récepteur de positionnement par satellites.

L'invention est applicable aux récepteurs des signaux transmis par les systèmes GPS, Glonass, Galileo et autres systèmes analogues de positionnement.

Un récepteur de positionnement par satellites utilise les signaux émis par une pluralité de satellites en orbite autour de la terre.

Chacun des satellites émet sur une ou plusieurs fréquences données un signal modulé en phase par la combinaison d'un code d'étalement pseudo-aléatoire et d'un message de navigation contenant entre autres les éphémérides des satellites.

Le positionnement consiste à mesurer le temps de propagation du signal émis par chacun des satellites jusqu'à son arrivée à l'antenne du récepteur. Ces temps, multipliés par la vitesse de transmission du signal, donnent les distances satellite-récepteur (ou « pseudo-distances ») qui, associées à la position des satellites calculée grâce aux éphémérides, permettent de calculer la position du récepteur et le décalage de son horloge par rapport aux horloges satellites.

Pour un système de positionnement, les signaux transmis par un satellite donné se distinguent, soit par la fréquence de la porteuse, soit par le code pseudo-aléatoire modulant cette porteuse.

Le principe de la mesure consiste à générer pour chaque satellite visible une réplique locale du code pseudo-aléatoire émis par un satellite sur une fréquence proche de ou mieux égale à la fréquence du signal reçu et à retarder ce code local jusqu'à ce qu'il soit aligné sur le code satellite. La valeur de ce retard mesurée grâce à l'horloge du récepteur correspond au temps de propagation du signal.

L'alignement des deux codes s'observe par corrélation des codes reçu et généré et est entretenu en permanence grâce à une boucle d'asservissement dite boucle de code.

Différentes sources d'erreur peuvent cependant affecter la mesure des pseudo-distances et dégrader la précision du calcul de position du récepteur.

Une des erreurs principales provient des trajets multiples ou multitrajets. En effet, lorsque le signal émis par le satellite est réfléchi avant d'atteindre le récepteur, le résultat de corrélation des signaux indirects vient s'ajouter à celui du signal du trajet direct. Deux cas sont alors possibles.

Selon le premier cas de multitrajet dit "in-the-chip", le trajet supplémentaire parcouru par les ondes réfléchies est suffisamment court pour que la fonction de corrélation des signaux réfléchis (trajet indirect) interfère avec la fonction de corrélation du trajet direct. La forme du pic de corrélation est alors déformée ainsi que la courbe caractéristique Avance moins Retard. Il en résulte une erreur de poursuite du code comprise entre plus ou moins un demi-chip.

Selon le second cas de multitrajet dit "out-of-the-chip", l'écart entre trajet indirect et trajet direct est tel que la fonction de corrélation du trajet indirect est distincte de la fonction de corrélation du trajet direct. Dans ce cas, il existe un risque, notamment lors du masquage du trajet direct, pour que l'acquisition et la poursuite du signal soient asservies sur le pic de corrélation du trajet indirect. Il en résulte une erreur sur la pseudo-distance, et par là même une erreur de calcul de position.

On comprend donc que le phénomène de multitrajet est une source potentielle d'erreur de positionnement.

En présence de multitrajet, les mesures de pseudo-distances sont potentiellement très perturbées, contrairement aux mesures de phase porteuse.

Considérons plus précisément la situation classique de multitrajet "in-the-chip" de type spéculaire. Dans ce cas :

- le récepteur reçoit un seul signal indirect, en plus du signal direct ;
- l"amplitude du signal indirect est inférieure à celle du signal direct ;
- la fréquence Doppler du signal indirect peut différer de celle du signal direct ; on désigne alors par « fréquence d'évanescence » l'écart de fréquence Doppler entre le signal direct et le signal indirect.

Dans le cas où les signaux sont d'amplitude constante, et où la fréquence d'évanescence est constante, l'erreur de poursuite du code du signal direct oscille dans le temps à l'intérieur d'une enveloppe d'erreur. La fréquence fondamentale de l'oscillation de l'erreur correspond alors précisément à la fréquence d'évanescence.

On précise ici que la fréquence d'évanescence est déterminée par l'évolution dans le temps de la configuration géométrique de l'ensemble constitué du satellite transmettant le signal poursuivi, de l'antenne du récepteur et du réflecteur. Dans un premier cas dit « non stationnaire », le récepteur est en mouvement par rapport au réflecteur, et la fréquence d'évanescence est proportionnelle à la vitesse relative du récepteur par rapport au réflecteur. Dans un second cas dit « stationnaire », le récepteur est immobile par rapport au réflecteur, et seul le mouvement du satellite sur son orbite est à l'origine de l'évanescence du signal réfléchi. L'évanescence est alors faible et est proportionnelle à la distance entre l'antenne du récepteur et le réflecteur, avec une sensibilité maximale de 1 Hz de fréquence Doppler par kilomètre.

Il découle de ce qui précède que dans le cadre du système GPS, la poursuite du code s'avère très sensible au phénomène de multitrajet. L'erreur de mesure de pseudo-distance peut ainsi atteindre au maximum 150 m pour le code civil C/A, et 15 m en code P(Y).

La poursuite de la phase est quant à elle très robuste au phénomène de multitrajet, avec une erreur de poursuite de classe centimétrique. La mesure de phase (aussi appelée Doppler intégré) étant obtenue par intégration de la commande Doppler élaborée par la boucle de porteuse, elle présente cependant l'inconvénient d'être ambiguë, avec une imprécision égale à un multiple de la longueur d'onde de la porteuse.

Les 2 types de mesures (code/phase) sont donc très complémentaires, et cette complémentarité peut avantageusement être exploitée pour rejeter les perturbations affectant les mesures de pseudo-distances.

Ainsi, une technique classiquement utilisée afin d'atténuer les conséquences préjudiciables du phénomène de multitrajet consiste à filtrer les perturbations affectant une pseudo-distance à un satellite mesurée par le récepteur en lissant cette pseudo-distance par des mesures Doppler (les « Dopplers intégrés » évoqués précédemment) déduites de mesures de phase porteuse d'un signal émis par le satellite.

Dans le cadre de cette technique, la valeur initiale de la pseudo-distance lissée est donnée par la valeur de la pseudo-distance non lissée, à l'instant d'initialisation du lisseur. Il en résulte en sortie de lisseur un transitoire de rejet de la perturbation initiale.

Une telle technique est classiquement utilisée notamment dans le domaine de l'aéronautique où elle fait figure de standard. Le but est alors de filtrer les erreurs de mesure générées par les multitrajets provenant des réflexions sur l'environnement de l'avion ainsi que sur la propre structure de l'avion. Le standard du domaine préconise l'emploi d'un filtre de lissage à gain constant, de constante de temps égale à 100 secondes, et présentant un régime transitoire de durée 360 secondes.

Une telle technique est également très répandue dans le domaine des récepteurs utilisés en tant que référence pour le positionnement différentiel ou relatif. Dans cet autre domaine, une constante de temps de lissage bien supérieure à 100 secondes peut être préconisée.

On comprend toutefois que le lissage des pseudo-distances n'est efficace que si le multitrajet est caractérisé par une évanescence suffisamment élevée.

Or la durée relativement importante du régime transitoire (360 secondes pour une application aéronautique) pendant lequel la précision des mesures est dégradée par rapport au régime permanent constitue un inconvénient certain de cette technique.

Elle limite effectivement la performance et la disponibilité opérationnelles des mesures GPS. C'est le cas notamment en situation d'interruption momentanée de la poursuite des signaux GPS (provenant par exemple de situations de masquage, ou d'interférences volontaires ou non) pour laquelle la durée excessive du transitoire de lissage peut dégrader significativement la disponibilité des mesures GPS, et par conséquent de la solution de navigation.

L'invention vise à remédier à cet inconvénient de la technique classique d'atténuation du phénomène de multitrajet, et a pour objectif d'améliorer la disponibilité opérationnelle de la solution de navigation précise.

A cet effet, l'invention propose, selon un premier aspect, un procédé d'atténuation du phénomène de multitrajet dans un récepteur de positionnement par satellites, dans lequel on filtre les perturbations affectant une pseudo-distance à un satellite mesurée par le récepteur en lissant ladite pseudo-distance par des mesures Doppler déduites de mesures de phase porteuse d'un signal émis par le satellite, caractérisé en ce que le lissage de ladite pseudo-distance est mis en oeuvre à l'aide d'un filtre de lissage non-stationnaire de manière à contrôler le transitoire de rejet d'une perturbation, le gain du filtre de lissage non stationnaire étant varié à chaque instant en fonction du temps écoulé depuis l'initialisation du lissage.

Certains aspects préférés, mais non limitatifs de l'invention sont les suivants :

- la pseudo-distance lissée à l'instant kT consiste en la somme entre la pseudo-distance mesurée à l'instant kT, et la pseudo-distance lissée à l'instant (k-1)T projetée à l'instant kT sur la base de la mesure de variation de la phase entre les instants (k-1)T et kT, ladite somme étant pondérée par le gain du filtre de lissage;

- le filtrage est réalisé selon les équations $\rho_k^f = g_k \rho_k + (1 - g_k)\delta_k$ et $\delta_k = \rho_{k-1}^f + \dfrac{\lambda}{2\pi}(\phi_k - \phi_{k-1})$, dans lesquelles $g_k$ représente le gain du filtre lisseur à l'instant kT, $\rho_k$ représente la pseudo-distance mesurée à l'instant kT, $\rho_k^f$ représente la pseudo-distance lissée à l'instant kT, $\phi_k$ représente la mesure de phase porteuse à l'instant kT, $\lambda$ représente la longueur d'onde de la porteuse, $\delta_k$ représente la pseudo distance lissée à l'instant (k-1)T et projetée à l'instant kT ;

- le gain $g_k$ est défini par les équations suivantes :

$$p_{k/k-1} = p_{k-1/k-1} + q$$

$$g_k = \frac{p_{k/k-1}}{p_{k/k-1} + r_k}$$

$$p_{k/k} = (1 - g_k)p_{k/k-1} \; ,$$

où l'entretien du gain $g_k$ adopte une initialisation selon $p_{0/0} = 1$, une modélisation fixe de la mesure selon $r_k = 1$, et un réglage de la performance dynamique selon le paramètre $q = \left(\dfrac{T}{\tau}\right)^2$ ; où $\tau$ est la constante de temps du filtre en régime stationnaire, de sorte que le gain $g_k$ tend vers la valeur constante $\displaystyle\lim_{k \to +\infty} g_k \sim \sqrt{q} = \dfrac{T}{\tau}$

- pour l'atténuation du phénomène de multitrajet dans un récepteur de positionnement par satellites réalisant un positionnement bi-fréquences ($f_1$, $f_2$), le filtrage est réalisé selon la somme pondérée $\rho_k^f = g_k \widetilde{\rho}_k + (1 - g_k)\widetilde{\delta}_k$, où

$$\begin{cases} \widetilde{\rho}_k = \alpha_1 \rho_{1,k} + \alpha_2 \rho_{2,k} \\ \widetilde{\delta}_k = \rho_{k-1}^f + \dfrac{\beta_1 \lambda_1}{2\pi}(\phi_{1,k} - \phi_{1,k-1}) + \dfrac{\beta_2 \lambda_2}{2\pi}(\phi_{2,k} - \phi_{2,k-1}) \end{cases}, \begin{cases} \alpha_1 + \alpha_2 = 1 \\ \beta_1 + \beta_2 = 1 \\ \dfrac{\alpha_1 + \beta_1}{f_1^2} + \dfrac{\alpha_2 + \beta_2}{f_2^2} = 0 \end{cases},$$

et où $g_k$ représente le gain du filtre lisseur à l'instant kT, $\rho_k^f$ représente la pseudo-distance lissée à l'instant kT, $\widetilde{\delta}_k$ représente la pseudo-distance lissée à l'instant (k-1)T et projetée à l'instant kT, $\rho_{1,k}$ et $\rho_{2,k}$ représentent les pseudo-distances mesurées à l'instant kT sur la porteuse de fréquence respectivement $f_1$, $f_2$, $\phi_{1,k}$ et $\phi_{2,k}$ représentent les mesures de phase porteuse à l'instant kT pour respectivement les porteuses $f_1$, $f_2$; $\lambda_1$ et $\lambda_2$ représentent les longueurs d'onde pour respectivement les porteuses $f_1$, $f_2$ ;
- le gain $g_k$ est défini par les équations suivantes :

$$p_{k/k-1} = p_{k-1/k-1} + q$$

$$g_k = \frac{p_{k/k-1}}{p_{k/k-1} + r_k}$$

$$p_{k/k} = (1 - g_k)p_{k/k-1} \; ,$$

où l'entretien du gain $g_k$ adopte une initialisation selon $p_{0/0} = \mathrm{var}(\widetilde{\rho}_0)$, une modélisation de la mesure selon $r_k = (\alpha_1\sigma_{1,k})^2 + (\alpha_2\sigma_{2,k})^2$ et un réglage de la performance dynamique selon le paramètre q, avec $\sigma_{1,k}$ et $\sigma_{2,k}$ représentant respectivement l'écart-type du bruit de mesure de pseudo-distance à l'instant kT sur la porteuse de fréquence respectivement $f_1$, $f_2$ ;

- le filtre de lissage fournit une estimation de la covariance du résidu de filtrage du bruit sur les mesures et d'une perturbation harmonique en entrée ;
- une pseudo-distance mesurée qui diffère de manière excessive de la pseudo-distance projetée est rejetée, le gain est étant alors momentanément figé, de sorte que $\begin{aligned} g_k &= g_{k-1} \\ \rho_k^f &= \delta_k \end{aligned}$ ;
- la valeur initiale de la pseudo-distance lissée est donnée par la valeur de la pseudo-distance non lissée, à l'instant d'initialisation du lissage ;
- le procédé est mis en oeuvre pour filtrer la mesure de pseudo distance à chacun des satellites poursuivis par le récepteur.

Selon un second aspect, l'invention concerne un récepteur de positionnement par satellites, comprenant un filtre adapté pour lisser une mesure de pseudo-distance à un satellite par des mesures Doppler déduites de mesures de phase porteuse d'un signal émis par le satellite de manière à filtrer des perturbations affectant ladite mesure de pseudo-distance, caractérisé en ce que ledit filtre de lissage est un filtre non-stationnaire dont le gain est varié à chaque instant en fonction du temps écoulé depuis l'initialisation du lissage.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 est un schéma de principe du filtrage d'une mesure de pseudo-distance selon l'invention ;
- la figure 2a représente une perturbation harmonique en entrée du lisseur ;
- la figure 2b représente la perturbation de la figure 2a lissée par respectivement la technique standard et par la technique selon l'invention.

Selon un premier aspect, l'invention concerne un procédé d'atténuation du phénomène de multitrajet dans un récepteur de positionnement par satellites, dans lequel on filtre les perturbations affectant une pseudo-distance à un satellite mesurée par le récepteur en lissant ladite pseudo-distance par des mesures Doppler déduites de mesures de phase porteuse d'un signal émis par le satellite.

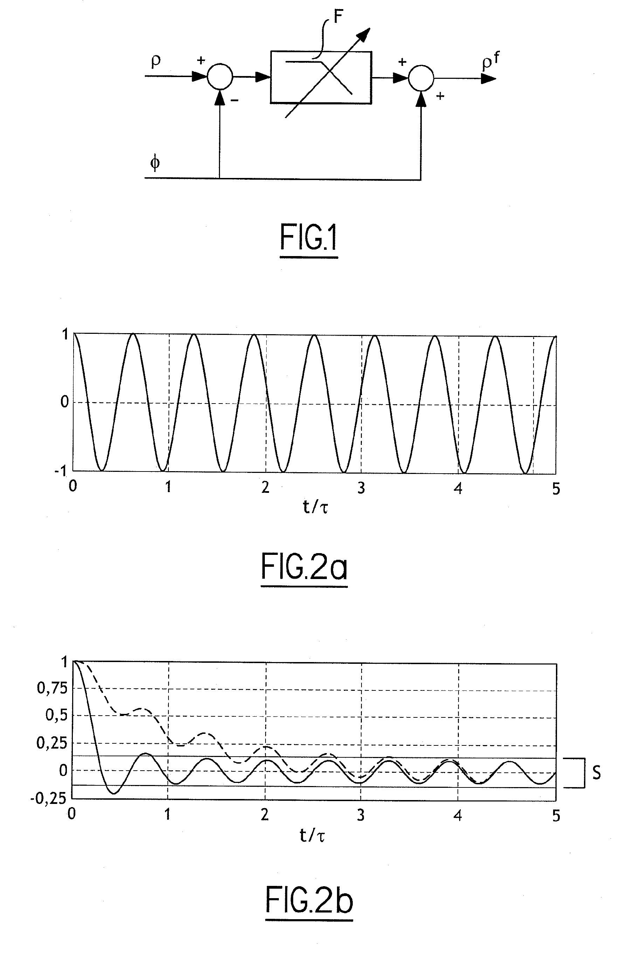

La figure 1 est un schéma de principe du filtrage d'une mesure de pseudo-distance selon l'invention, dans un contexte de positionnement mono-fréquence. La différence entre la mesure de pseudo-distance $\rho$ à un satellite et la mesure de phase porteuse $\phi$ du signal émis par le satellite est appliquée en entrée d'un filtre de lissage F fournissant en sortie la mesure de pseudo-distance lissée $\rho^f$.

Selon l'invention, le lissage de la pseudo-distance $\rho$ est mis en oeuvre à l'aide d'un filtre de lissage F non-stationnaire dont le gain est choisi de manière à contrôler le transitoire de rejet d'une perturbation affectant ladite pseudo-distance.

Le gain du filtre F non stationnaire est plus précisément varié à chaque instant en fonction du temps écoulé depuis l'initialisation du lissage.

Dans ce contexte de positionnement mono-fréquence, le gain du filtre non stationnaire tend vers une valeur constante.

On peut de la sorte définir un filtre de lissage des pseudo-distances par les dopplers intégrés équivalent en régime permanent au lisseur à gain constant de l'état de la technique, mais permettant de réduire drastiquement la durée du régime transitoire de rejet d'une perturbation en optimisant le gain à chaque instant, en fonction du temps écoulé depuis l'initialisation du lissage, réduire le transitoire.

On décrit ci-après un mode de réalisation possible d'un algorithme de lissage non-stationnaire selon lequel on varie le gain du filtre lisseur à chaque instant.

Les notations utilisées sont définies de la manière suivante.

*T* période d'échantillonnage des mesures

$\tau$ constante de temps du filtre stationnaire
$g_k$ gain du filtre lisseur à l'instant kT
$\rho_k$ mesure de pseudo-distance à l'instant kT (en mètre)
$\phi_k$ mesure de phase porteuse à l'instant kT (en radian)
$\lambda$ longueur d'onde de la porteuse (en mètre)
$\rho^f_k$ mesure de pseudo-distance filtrée à l'instant kT
$\delta_k$ pseudo-distance projetée à l'instant kT
$\sigma_k$ écart-type du bruit de mesure de pseudo-distance à l'instant kT

Le lissage des mesures de pseudo-distance est donné par l'ensemble des équations suivantes.
La pseudo distance lissée à l'instant (k-1)T est dans un premier temps projetée à l'instant kT, sur la base de la mesure de la variation de phase porteuse entre les instants (k-1)T et kT :

$$\delta_k = \rho^f_{k-1} + \frac{\lambda}{2\pi}(\phi_k - \phi_{k-1})$$

Le lissage consiste en une somme pondérée de la pseudo-distance mesurée et de la pseudo-distance projetée à l'instant kT :

$$\rho^f_k = g_k\rho_k + (1-g_k)\delta_k$$

La pondération (c'est-à-dire le gain $g_k$ du filtre de lissage) dépend de l'instant kT et est déterminée de manière optimale comme indiqué ci-après.
L'algorithme permettant la variation du gain du filtre de lissage à chaque instant comprend une phase d'initialisation, suivie d'une phase d'entretien.

✔ Phase d'initialisation

$$p_{0/0} = 1$$

$$q = \left(\frac{T}{\tau}\right)^2$$

✔ Phase d'entretien

On dispose de $p_{k-1/k-1}$, et la valeur du gain à l'instant k est donnée par l'ensemble des équations suivantes :

$$p_{k/k-1} = p_{k-1/k-1} + q$$

$$r_k = 1$$

$$g_k = \frac{p_{k/k-1}}{p_{k/k-1} + r_k}$$

$$p_{k/k} = (1 - g_k)p_{k/k-1}$$

Le filtre non stationnaire ainsi conçu est en particulier caractérisé par un gain tendant vers une valeur constante :

$$\lim_{k \to +\infty} g_k \sim \sqrt{q} = \frac{T}{\tau}.$$

Le filtre non stationnaire ainsi conçu est équivalent en régime permanent à un filtre lisseur à gain constant ; il permet toutefois de réduire drastiquement la durée du régime transitoire.

Cela est notamment apparent des figures 2a et 2b.

On a représenté sur la figure 2a une perturbation harmonique en entrée du lisseur, cet exemple étant représentatif d'une situation de multitrajet spéculaire évanescent. La figure 2b représente quant à elle la perturbation de la figure 2a lissée par respectivement la technique standard (en traits pointillés) et par la technique selon l'invention (en traits pleins).

En présence d'une perturbation harmonique en entrée du lisseur (cf. figure 2a), la sortie du lisseur est initialisée par la valeur initiale de la perturbation, et il s'ensuit un transitoire de rejet de la perturbation. Comme cela est apparent de la figure 2b, l'invention permet de réduire d'un facteur d'environ 3 la durée de ce transitoire de rejet (rejet selon l'invention en traits pleins, par opposition au rejet en traits pointillés selon le lissage standard à gain constant) pour ramener l'erreur en deçà d'un seuil de rejet représenté par la référence S.

En réduisant la durée du régime transitoire, l'invention permet d'écourter les phases d'indisponibilité des mesures GPS précises, consécutives à une perte du signal GPS. Il en résulte une amélioration de la disponibilité opérationnelle de la solution de navigation précise.

Selon un mode de réalisation préférentiel de l'invention, une pseudo-distance mesurée qui diffère de manière excessive de la pseudo-distance projetée est rejetée par le lisseur et l'adaptation du gain du lisseur est momentanément figée.

Si $|\rho_k - \delta_k| > $ *seuil* alors

$$g_k = g_{k-1}$$

$$p_{k/k} = p_{k/k-1}$$

$$\rho_k^f = \delta_k$$

fin si

On relèvera que dans un contexte de positionnement mono-fréquence (par exemple en mode C/A), l'existence d'une dérive de l'erreur ionosphérique entre les mesures de pseudo-distance et de doppler intégré, se traduit par un biais de mesure en régime stationnaire. Ceci constitue un obstacle à l'application d'un filtrage de grande constante de temps $\tau$ .

En revanche, dans un contexte de positionnement bi-fréquence (par exemple en mode P(Y)), on peut étendre l'algorithme de lissage présenté ci-dessus, afin d'obtenir une pseudo-distance lissée, corrigée bi-fréquence de l'erreur ionosphérique, et qui ne présente pas de biais en présence de dérive de l'erreur ionosphérique.

Dans ce contexte bi-fréquence (fréquences $f_1$ et $f_2$; $f_i = c/\lambda_i$ où c représente la vitesse de la lumière), le lissage des mesures de pseudo-distance s'obtient par une adaptation des équations définissant le filtre en mono-fréquence précédemment décrit.

Les pseudo-distances mesurée $\tilde{\rho}_k$ et projetée $\tilde{\delta}_k$ dont le filtre fait la somme pondérée, sont dans ce contexte elles-mêmes obtenues par pondération des mesures réalisées sur chaque porteuse :

$$\tilde{\rho}_k = \alpha_1 \rho_{1,k} + \alpha_2 \rho_{2,k}$$

$$\widetilde{\delta}_k = \rho_{k-1}^f + \frac{\beta_1 \lambda_1}{2\pi}(\phi_{1,k} - \phi_{1,k-1}) + \frac{\beta_2 \lambda_2}{2\pi}(\phi_{2,k} - \phi_{2,k-1})$$

$$\rho_k^f = g_k \widetilde{\rho}_k + (1 - g_k)\widetilde{\delta}_k$$

Les pondérations $(\alpha_1, \alpha_2, \beta_1, \beta_2)$ satisfont au système suivant d'équations :

$$\begin{cases} \alpha_1 + \alpha_2 = 1 \\ \beta_1 + \beta_2 = 1 \\ \dfrac{\alpha_1 + \beta_1}{f_1^2} + \dfrac{\alpha_2 + \beta_2}{f_2^2} = 0 \end{cases}$$

Dans ce cas, il n'y a aucun frein à l'augmentation de la constante de temps du lissage, qui peut devenir arbitrairement grande, sans pour autant introduire un biais de mesure en présence de divergence code-phase porteuse d'origine ionosphérique. Le filtre lisseur est alors modifié comme suit :

✔ Réglage
Le paramètre $q$ est sélectionné en fonction de la performance dynamique attendue du lissage

✔ Phase d'initialisation
$p_{0/0}$ est choisi égal à la variance de l'erreur initiale de mesure composite de pseudo-distance $(\widetilde{\rho}_0 = \alpha_1 \rho_{1,0} + \alpha_2 \rho_{2,0})$

✔ Phase d'entretien
Le calcul du gain de lissage est optimisé à l'instant kT sur la base de l'estimation de l'écart-type du bruit de mesure composite de pseudo-distance à cet instant, lui-même calculé à partir de l'estimation de l'écart-type du bruit de mesure de pseudo-distance sur chacune des fréquences porteuses :

$$r_k = (\alpha_1 \sigma_{1,k})^2 + (\alpha_2 \sigma_{2,k})^2$$

Dans ce cas, le terme $p_{k/k}$ fournit précisément une estimation de la covariance du résidu de filtrage du bruit sur les mesures. Cette covariance estimée est transmise au filtre de navigation du système de positionnement.

Le filtre proposé résulte ainsi en une optimisation permanente du gain, adaptée au modèle instantané des erreurs de mesure. En ne limitant effectivement pas l'évolution du gain dans le temps, on peut réaliser la nécessaire adaptation du filtrage aux évolutions du modèle d'erreur des mesures et ainsi filtrer de manière optimale des mesures dont le modèle d'erreur est non stationnaire et non planifié.

On relèvera par ailleurs, que le filtre lisseur peut être adapté pour fournir à chaque instant au filtre de navigation du système de positionnement une estimation de la covariance du résidu de filtrage du bruit sur les mesures, et du résidu de filtrage d'une perturbation harmonique en entrée.

Par ailleurs, une généralisation des équations définissant le lisseur non stationnaire permet d'adapter celui-ci au problème du filtrage d'un bruit de mesure régi par un processus Markovien d'ordre un ou supérieur.

On retiendra que l'invention a été décrite en relation avec une mesure de pseudo-distance entre le récepteur et l'un des satellites poursuivis par le récepteur, mais qu'elle a bien entendu vocation à être mise en oeuvre pour filtrer la mesure de pseudo distance à chacun des satellites poursuivis par le récepteur.

L'invention n'est par ailleurs pas limitée à un procédé, mais s'étend également à un système de positionnement par satellites comportant des moyens adaptés pour mettre en oeuvre le procédé selon le premier aspect de l'invention. En particulier, l'invention s'étend à un récepteur de positionnement par satellites, comprenant un filtre adapté pour lisser une mesure de pseudo-distance à un satellite par des mesures Doppler déduites de mesures de phase porteuse d'un signal émis par le satellite de manière à filtrer des perturbations affectant ladite mesure de pseudo-distance, caractérisé en ce que ledit filtre de lissage est un filtre non-stationnaire.

**Revendications**

1. Procédé d'atténuation du phénomène de multitrajet dans un récepteur de positionnement par satellites, dans lequel on filtre les perturbations affectant une pseudo-distance à un satellite mesurée par le récepteur en lissant ladite pseudo-distance par des mesures Doppler déduites de mesures de phase porteuse d'un signal émis par le satellite, **caractérisé en ce que** le lissage de ladite pseudo-distance est mis en oeuvre à l'aide d'un filtre de lissage non-stationnaire de manière à contrôler le transitoire de rejet d'une perturbation, le gain du filtre de lissage non stationnaire étant varié à chaque instant en fonction du temps écoulé depuis l'initialisation du lissage.

2. Procédé selon la revendication 1, mis en oeuvre à la période $T$ d'échantillonnage des mesures, dans lequel la pseudo-distance lissée à l'instant kT consiste en la somme entre la pseudo-distance mesurée à l'instant kT, et la pseudo-distance lissée à l'instant (k-1)T projetée à l'instant kT sur la base de la mesure de variation de la phase entre les instants (k-1)T et kT, ladite somme étant pondérée par le gain du filtre de lissage.

3. Procédé selon la revendication 2, dans lequel le filtrage est réalisé selon les équations $\rho_k^f = g_k \rho_k + (1 - g_k)\delta_k$

   et $\delta_k = \rho_{k-1}^f + \dfrac{\lambda}{2\pi}(\phi_k - \phi_{k-1})$, dans lesquelles $g_k$ représente le gain du filtre lisseur à l'instant kT, $\rho_k$ représente

   la pseudo-distance mesurée à l'instant kT, $\rho_k^f$ représente la pseudo-distance lissée à l'instant kT, $\phi_k$ représente la mesure de phase porteuse à l'instant kT, $\lambda$ représente la longueur d'onde de la porteuse, $\delta_k$ représente la pseudo distance lissée à l'instant (k-1)T et projetée à l'instant kT .

4. Procédé selon la revendication 3, dans lequel le gain $g_k$ est défini par les équations suivantes :

$$p_{k/k-1} = p_{k-1/k-1} + q$$

$$g_k = \frac{p_{k/k-1}}{p_{k/k-1} + r_k}$$

$$p_{k/k} = (1 - g_k)p_{k/k-1} \ ,$$

   et où l'entretien du gain $g_k$ adopte une initialisation selon $p_{0/0} = 1$, une modélisation fixe de la mesure selon $r_k = 1$,

   et un réglage de la performance dynamique selon le paramètre $q = \left(\dfrac{T}{\tau}\right)^2$, où $\tau$ est la constante de temps du filtre en régime stationnaire, de sorte que le gain $g_k$ tend vers la valeur constante $\lim\limits_{k \to +\infty} g_k \sim \sqrt{q} = \dfrac{T}{\tau}$ .

5. Procédé selon la revendication 2, pour l'atténuation du phénomène de multitrajet dans un récepteur de positionnement par satellites réalisant un positionnement bi-fréquences ($f_1$, $f_2$), dans lequel le filtrage est réalisé selon la

   somme pondérée $\rho_k^f = g_k \tilde{\rho}_k + (1 - g_k)\tilde{\delta}_k$,

où

$$\begin{cases} \widetilde{\rho}_k = \alpha_1 \rho_{1,k} + \alpha_2 \rho_{2,k} \\ \widetilde{\delta}_k = \rho_{k-1}^f + \dfrac{\beta_1 \lambda_1}{2\pi}(\phi_{1,k} - \phi_{1,k-1}) + \dfrac{\beta_2 \lambda_2}{2\pi}(\phi_{2,k} - \phi_{2,k-1}) \end{cases}, \quad \begin{cases} \alpha_1 + \alpha_2 = 1 \\ \beta_1 + \beta_2 = 1 \\ \dfrac{\alpha_1 + \beta_1}{f_1^2} + \dfrac{\alpha_2 + \beta_2}{f_2^2} = 0 \end{cases},$$

et où $g_k$ représente le gain du filtre lisseur à l'instant kT, $\rho_k^f$ représente la pseudo-distance lissée à l'instant kT, $\widetilde{\delta}_k$ représente la pseudo-distance lissée à l'instant (k-1)T et projetée à l'instant kT, $\rho_{1,k}$ et $\rho_{2,k}$ représentent les pseudo-distances mesurées à l'instant kT sur la porteuse de fréquence respectivement $f_1$, $f_2$, $\phi_{1,k}$ et $\phi_{2,k}$ représentent les mesures de phase porteuse à l'instant kT pour respectivement les porteuses $f_1$, $f_2$, $\lambda_1$ et $\lambda_2$ représentent les longueurs d'onde pour respectivement les porteuses $f_1$, $f_2$.

6. Procédé selon la revendication 5, dans lequel le gain $g_k$ est défini par les équations suivantes :

$$p_{k/k-1} = p_{k-1/k-1} + q$$

$$g_k = \frac{p_{k/k-1}}{p_{k/k-1} + r_k}$$

$$p_{k/k} = (1 - g_k)p_{k/k-1},$$

et où l'entretien du gain $g_k$ adopte une initialisation selon $\rho_{0/0} = \mathrm{var}(\widetilde{\rho}_0)$, une modélisation de la mesure selon $r_k = (\alpha_1 \sigma_{1,k})^2 + (\alpha_2 \sigma_{2,k})^2$ et un réglage de la performance dynamique selon le paramètre q, avec $\sigma_{1,k}$ et $\sigma_{2,k}$ représentant respectivement l'écart-type du bruit de mesure de pseudo-distance à l'instant kT sur la porteuse de fréquence respectivement $f_1$, $f_2$.

7. Procédé selon l'une des revendications 5 ou 6, dans lequel le filtre de lissage fournit une estimation de la covariance du résidu de filtrage du bruit sur les mesures et d'une perturbation harmonique en entrée.

8. Procédé selon l'une des revendications 2 à 7, dans lequel une pseudo-distance mesurée qui diffère de manière excessive de la pseudo-distance projetée est rejetée, le gain est étant alors momentanément figé, de sorte que

$$g_k = g_{k-1}$$
$$\rho_k^f = \delta_k$$

9. Procédé selon l'une quelconque des revendications 1 à 8, dans lequel la valeur initiale de la pseudo-distance lissée est donnée par la valeur de la pseudo-distance non lissée, à l'instant d'initialisation du lissage.

10. Procédé selon l'une quelconque des revendications 1 à 9, **caractérisé en ce qu'**il est mis en oeuvre pour filtrer la mesure de pseudo distance à chacun des satellites poursuivis par le récepteur.

11. Récepteur de positionnement par satellites, comprenant un filtre adapté pour lisser une mesure de pseudo-distance à un satellite par des mesures Doppler déduites de mesures de phase porteuse d'un signal émis par le satellite de manière à filtrer des perturbations affectant ladite mesure de pseudo-distance, **caractérisé en ce que** ledit filtre de lissage est un filtre non-stationnaire dont le gain est varié à chaque instant en fonction du temps écoulé depuis l'initialisation du lissage.

FIG.1

FIG.2a

FIG.2b

**Office européen des brevets**

**RAPPORT DE RECHERCHE EUROPEENNE**

Numéro de la demande

EP 08 15 4416

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | SIMILI D V ET AL: "Code-Carrier Divergence Monitoring for the GPS Local Area Augmentation System" POSITION, LOCATION, AND NAVIGATION SYMPOSIUM, 2006 IEEE/ION CORONADO, CA APRIL 25-27, 2006, PISCATAWAY, NJ, USA,IEEE, 25 avril 2006 (2006-04-25), pages 483-493, XP010924964 ISBN: 0-7803-9454-2 | 1-3,9-11 | INV. G01S1/00 |
| Y | * page 483, colonne de droite, 3ème alinéa, lignes 1-3 * * page 484, colonne de droite, section: D. LGF Smooting Filter Algorithm * * page 485, colonne de droite, 1er alinéa, ligne 3 - 2ème alinéa, ligne 2 * ----- | 4-8 | |
| X | M. E. CANNON AND G. LACHAPELLE: "Analysis of a High-Performanmce C/A-Code GPS Receiver in Kinematic Mode" NAVIGATION: JOURNAL OF THE INSTITUTE OF NAVIGATION, 1992, pages 285-300, XP002461740 USA * page 295, ligne 7 - ligne 17 * * page 295, eq. 9-12 * ----- | 1-3,9-11 | **DOMAINES TECHNIQUES RECHERCHES (IPC)** G01S |
| X | RANKIN J: "An error model for sensor simulation GPS and differential GPS" POSITION LOCATION AND NAVIGATION SYMPOSIUM, 1994., IEEE LAS VEGAS, NV, USA 11-15 APRIL 1994, NEW YORK, NY, USA,IEEE, 11 avril 1994 (1994-04-11), pages 260-266, XP010117740 ISBN: 0-7803-1435-2 * page 261, colonne de droite, section: "Carrier phase smoothing" * ----- -/-- | 1-3,9-11 | |

Le présent rapport a été établi pour toutes les revendications

| Lieu de la recherche | Date d'achèvement de la recherche | Examinateur |
|---|---|---|
| Munich | 7 août 2008 | Hekmat, Taymoor |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
......................................................................
& : membre de la même famille, document correspondant

EPO FORM 1503 03.82 (P04C02)

**Office européen**

**des brevets**

**RAPPORT DE RECHERCHE EUROPEENNE**

Numéro de la demande

EP 08 15 4416

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | MCGRAW, G. A.: "Generalized Divergence-Free Carrier Smoothing with Applications to Dual Frequency Differential GPS" PROCEEDINGS OF ION NTM-2006, 18 janvier 2006 (2006-01-18), pages 293-300, XP002461741 Monterey,CA, USA * pages 294-295, sections: 2.1 et 2.2 * ----- | 4-8 | |
| A | DAH-JING JWO: "IMPROVED ACCURACY AND DIVERGENCE CORRECTION FOR THE GPS CARRIER-SMOOTHED-CODE PROCESSING" PREVENTION, RODALE PRESS, EMMAUS, PA, US, vol. 7, no. 4, novembre 2000 (2000-11), pages 239-248, XP009055743 ISSN: 0032-8006 * le document en entier * ----- | 1-11 | |

| | DOMAINES TECHNIQUES RECHERCHES (IPC) |
|---|---|

Le présent rapport a été établi pour toutes les revendications

| Lieu de la recherche | Date d'achèvement de la recherche | Examinateur |
|---|---|---|
| Munich | 7 août 2008 | Hekmat, Taymoor |